# FASCICULE DE BREVET EUROPEEN

(11) **EP 3 898 414 B1**
(45) Date de publication et mention de la délivrance du brevet: **04.12.2024**
(21) Numéro de dépôt: 19817288.4
(22) Date de dépôt: 10.12.2019
(51) Int. Cl.: B64D 11/06

(54) **ARRANGEMENT D'UNITÉS DE SIÈGES, NOTAMMENT POUR UN AVION**
ANORDNUNG VON SITZEINHEITEN, INSBESONDERE FÜR EIN FLUGZEUG
ARRANGEMENT OF SEAT UNITS, ESPECIALLY FOR AN AIRPLANE

(30) Priorité: 18.12.2018 FR 1873144
(43) Date de publication de la demande: 27.10.2021
(73) Titulaire: Safran Seats, 78370 Plaisir (FR)
(72) Inventeur: GLAIN, Arthur, 92100 BOULOGNE BILLANCOURT (FR); RUIZ, Oscar, 78000 VERSAILLES (FR); EHRMANN, Charles, 78610 LES BREVIAIRES (FR)
(74) Mandataire: Marconnet, Sébastien
(86) Numéro de dépôt international: PCT/EP2019/084443
(87) Numéro de publication internationale: WO 2020/126681

(56) Documents cités:
- WO-A1-2010/131014
- WO-A1-2014/049362
- US-A1- 2017 088 267

## Description

La présente invention porte sur un arrangement d'unités de sièges, notamment pour un d'avion. L'invention trouve une application particulièrement avantageuse avec les sièges d'avion de type "classe affaire". L'invention pourra également être mise en oeuvre avec des sièges installés dans d'autres moyens de transport, comme par exemple des sièges de bus, de trains, ou de bateaux.

Les sièges d'avion de type "classe affaires" offrent aux passagers différentes positions de confort, de la position "assise" jusqu'à une position "allongée" dans laquelle le siège définit un plan de couchage sensiblement horizontal pour le passager.

Des positions intermédiaires de confort sont aussi proposées, telles que la position "relax" dans laquelle le dossier est fortement incliné. Généralement, ces positions sont obtenues par l'inclinaison du dossier, pivotant autour d'un axe horizontal. Le passager peut alors rester sur le siège lors de transitions entre les différentes positions.

Le document US7178871 décrit un arrangement de sièges individuels destinés à être installés dans une cabine d'avion. Cet arrangement de sièges comporte une première rangée d'unités de sièges disposées les unes derrière les autres et tournées dans une première direction de la cabine d'avion, et une deuxième rangée d'unités de sièges disposées les unes derrière les autres et tournées dans une deuxième direction de la cabine d'avion opposée à la première direction. La deuxième rangée d'unités de sièges est disposée du côté d'un couloir de circulation, comme cela est montré notamment en figure 11. Chaque unité de siège comporte un siège convertible entre une position assise et une position allongée, une console comportant une zone de pieds destinée à recevoir les pieds du passager assis dans le siège correspondant, et une coque d'intimité entourant au moins en partie le siège.

Toutefois, l'inconvénient d'une telle configuration est que les passagers situés dans les sièges de la première rangée n'ont pas un accès direct au couloir de circulation. En effet, afin d'accéder au couloir de circulation, les passagers de la première rangée doivent pénétrer dans l'espace de vie des passagers de la deuxième rangée, ce qui nuit à leur intimité. En outre, l'espace de vie est réduit et n'offre pas d'espace de rangement pour le passager.

Le document WO2014049362 décrit un agencement de sièges pour passagers dans une cabine d'avion, comprenant une pluralité de paires d'unités de siège. Les paires d'unités de siège sont situées directement l'une derrière l'autre. Chaque paire d'unités de siège comprend une unité de siège côté couloir et une unité de siège opposée au couloir. Les axes longitudinaux des unités de sièges opposées au couloir sont alignés les uns avec les autres, et l'axe longitudinal de l'unité de sièges côté couloir de chaque paire d'unité de siège est inclinée de manière à fournir un chemin d'accès aux passagers mettant en communication avec le couloir une unité de siège opposée au couloir.

Le document US2017088267 décrit un agencement de sièges passagers pour un avion de ligne ou un autre moyen de transport comprenant une pluralité de suites individuelles disposées en colonnes longitudinales. Les allées latérales s'étendant depuis des allées longitudinales mènent à des allées secondaires qui donnent accès à des suites espacées par rapport aux allées longitudinales. Chaque allée latérale donne accès à deux suites extérieures.

L'invention vise à remédier efficacement à ces inconvénients en proposant un arrangement d'unités de sièges individuelles destinées à être installées notamment dans une cabine d'avion selon la revendication 1.

L'invention permet ainsi à tous les passagers de l'avion d'accéder directement au couloir de circulation, tout en optimisant la densité d'unités de sièges dans la cabine d'avion. En outre, le positionnement des sièges des deux rangées suivant deux directions opposées permet de maximiser l'espace disponible pour un passager lorsque le siège est en position assise ou en position allongée. L'invention améliore également l'espace de vie de chaque passager en proposant des espaces de rangements formés par les consoles de la colonne adjacente d'unités de sièges.

Selon une réalisation, les coques des sièges d'un bloc sont monoblocs l'une par rapport à l'autre.

Selon une réalisation, un axe d'un passage d'accès forme un angle non nul par rapport à une droite perpendiculaire à un axe de la cabine d'avion.

Selon une réalisation, une surface d'un siège en position allongée et une surface d'une zone de pieds située dans un prolongement dudit siège en position allongée définissent une surface de lit d'une unité de siège correspondante.

Selon une réalisation, une plus grande dimension de la surface de lit d'une unité siège de la deuxième rangée forme un angle non nul par rapport à un axe de la cabine d'avion.

Selon une réalisation, un pas entre deux unités de sièges de la première rangée est le même qu'un pas entre deux unités de sièges de la deuxième rangée.

Selon une réalisation, le pas entre deux unités de sièges de la première rangée ou de la deuxième rangée est compris entre 1.77 m (70 pouces) 2.16 m (85 pouces) et vaut de préférence 1.90 m (75 pouces).

L'invention a également pour objet une cabine d'avion caractérisée en ce qu'elle comporte au moins un arrangement d'unités de sièges tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue de dessus d'un arrangement d'unités de sièges selon la présente invention;
[Fig. 2] La figure 2 est une vue de dessus d'une cabine d'avion comportant des arrangements d'unités de sièges selon l'invention;
[Fig. 3] La figure 3 est une vue de dessus d'une cabine d'avion comportant des arrangements d'unités de sièges selon l'invention faisant apparaître les empreintes des surfaces de lits des unités de sièges.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

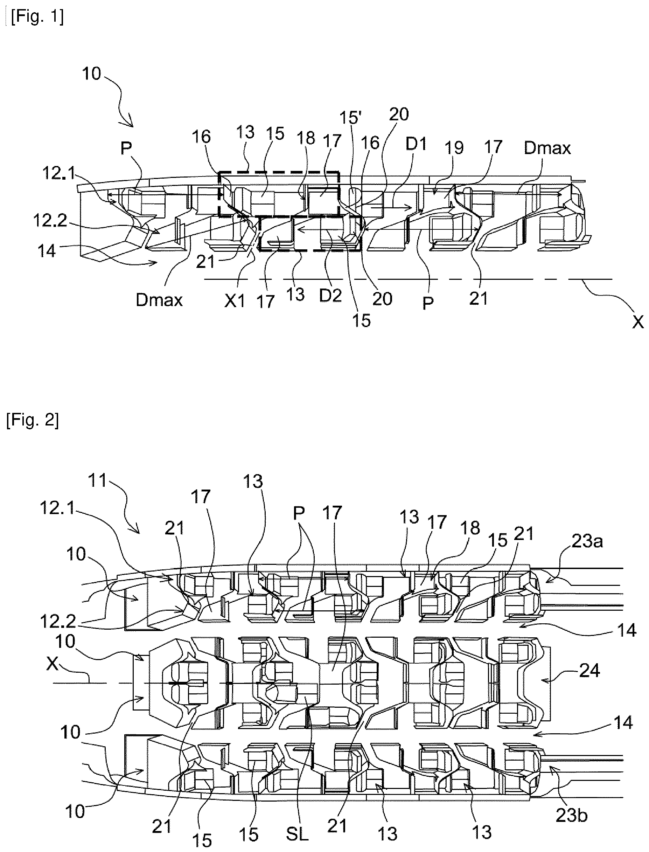

La figure 1 montre un arrangement 10 d'unités de sièges 13 individuelles destinées à être installées dans une cabine d'avion 11 d'axe longitudinal X. Cet arrangement 10 comporte une première rangée 12.1 d'unités de sièges 13 disposées les unes derrière les autres et tournées dans une première direction D1 de la cabine d'avion 11, et une deuxième rangée 12.2 d'unités de sièges 13 disposées les unes derrière les autres et tournées dans une deuxième direction D2 de la cabine d'avion 11 opposée à la première direction D1. La direction D1 pourra par exemple être dirigée vers l'avant de l'avion, c'est-à-dire vers le cockpit, et la direction D2 vers l'arrière de l'avion, ou inversement.

La deuxième rangée 12.2 d'unités de sièges 13 est disposée du côté d'un couloir de circulation 14. La première rangée 12.1 de sièges pourra être disposée du côté du fuselage de l'avion ou dans une partie centrale de l'avion, c'est-à-dire dans une zone ne permettant pas d'accéder au couloir de circulation 14 sans traverser la deuxième rangée 12.2 d'unités de sièges.

Chaque unité de siège 13 comporte un siège 15 convertible entre une position "assise", correspondant à la position utilisée notamment lors des phases d'arrêt, de décollage, et d'atterrissage de l'avion, et une position "allongée", dans laquelle le siège 15 définit un plan sensiblement horizontal pour le passager. En particulier, la position "assise" et la position "allongée" constituent des configurations du siège 15 dans deux positions extrêmes. Selon des variantes de réalisation, le siège 15 pourra également prendre des positions intermédiaires, dites positions relax, entre ces deux positions extrêmes.

Une coque d'intimité 16 entoure au moins en partie chaque siège 15. Pour les sièges situés du côté du couloir 14, la coque 16 se prolonge suivant un côté du siège 15 longeant le couloir 14.

En outre, une console 17 comporte une zone de pieds 18 destinée à recevoir les pieds du passager assis dans le siège 15 de l'unité 13 correspondante, notamment lorsque le siège 15 est en position allongée. A cet effet, la console 17 comporte une ouverture dirigée vers le passager du siège correspondant situé derrière la console 17. La surface plane d'un siège 15 en position allongée est destinée à être située dans le prolongement de la zone de pieds 18, de sorte que la surface du siège 15 en position allongée et la surface de la zone de pieds 18 définissent une surface de lit SL.

La console 17 d'une unité de siège 13 d'une rangée 12.1, 12.2 donnée est disposée à proximité d'un siège 15 d'une unité de siège 13 de l'autre rangée pour définir un espace 19 pour ranger et/ou poser des objets. Une console 17 présente à cet effet une paroi supérieure plane sur laquelle le passager du siège 15 adjacent pourra notamment poser des objets. La paroi supérieure pourra ainsi servir de table, de surface de travail, de table de repas, de table de cocktail ou de toute autre surface utilisable pour un passager assis dans le siège 15 adjacent. La console 17 pourra également comporter des espaces de rangement de type porte-magazine, tiroirs, ou autre.

Autrement dit, au moins une partie de la console 17 comportant la zone de pieds 18 d'une unité de siège 13 de la première rangée 12.1 s'étend dans l'espace occupé par un passager assis dans un siège 15 adjacent de la deuxième rangée 12.2 et inversement. La console 17 définit ainsi un espace pour ranger et/ou poser des objets pour un passager d'un siège 15 situé dans la rangée adjacente à celle dans laquelle est disposée la console 17.

L'arrangement 10 présente des passages d'accès 21 vers un couloir de circulation 14. Un passage d'accès 21 est délimité au moins en partie d'une part par une coque 16 d'une unité de siège 13 de la deuxième rangée 12.2 et d'autre part par une console 17 adjacente d'une unité de siège 13 de la deuxième rangée 12.2, de telle façon que chaque passage 21 autorise un accès direct au couloir de circulation 14 à un passager d'un siège 15 appartenant à la première rangée 12.1 d'unités de sièges 13. Un axe X1 d'un passage d'accès 21 forme de préférence un angle non nul par rapport à une droite perpendiculaire à l'axe X longitudinal de la cabine d'avion 11.

Avantageusement, des sièges 15 de la première rangée 12.1 et de la deuxième rangée 12.2 sont arrangés par bloc 22 de deux unités de sièges 15, chaque bloc 22 comportant une unité de siège 13 de la première rangée 12.1 et une unité de siège 13 de la deuxième rangée 12.2. Chaque bloc 22 comporte un premier siège 15 tourné dans la direction D1 de la cabine d'avion 11 et un deuxième siège 15 tourné dans la direction opposée D2 de la cabine d'avion 11.

Le premier siège 15 et le deuxième siège 15' de chaque bloc 22 se recouvrent longitudinalement suivant leur dossier 20, tel que montré sur la figure 1. Ainsi, il existe un recouvrement au niveau des épaules de deux passagers positionnés côte à côte mais tournés suivant deux directions opposées D1, D2.

Les coques 16 des sièges 15 d'un même bloc 22 sont monoblocs l'une par rapport à l'autre. Par "monobloc", on entend le fait que les coques 16 des deux sièges 15 pourront être réalisées à partir d'une même pièce, obtenue par exemple par moulage, ou de plusieurs pièces assemblées entre elles par des moyens de fixation adaptés.

Suivant un mode de réalisation, un pas P entre deux unités de sièges 13 de la première rangée 12.1 est le même qu'un pas entre deux unités de sièges 13 de la deuxième rangée 12.2. On rappelle qu'un pas P correspond à la distance entre deux points de référence de deux unités de sièges adjacentes situées l'une derrière l'autre dans une même rangée.

Le pas P entre deux unités de sièges 15 de la première rangée 12.1 ou de la deuxième rangée 12.2 est compris entre 70 et 85 pouces et vaut de préférence 75 pouces.

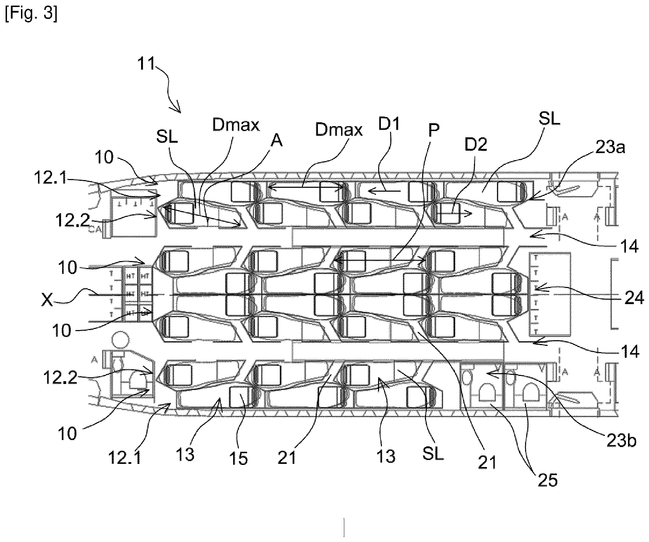

Par rapport à la première rangée 12.1, les dimensions longitudinales des unités des sièges 13 de la deuxième rangée 12.2 sont réduites en raison de la présence des passages d'accès 21 vers les couloirs de circulation 14. Afin de compenser cette perte d'espace, une plus grande dimension Dmax de la surface de lit SL d'un siège 15 de la deuxième rangée 12.2 forme un angle A non nul par rapport à l'axe X de la cabine d'avion 11, tel que cela est visible sur les figures 1 et 3. Cet angle A est par exemple compris entre 3 et 20 degrés. Les unités de sièges 13 de la première rangée 12.1 n'ayant pas de contrainte d'espace particulière, une plus grande dimension Dmax de leur surface de lit SL s'étend suivant l'axe X de la cabine d'avion. En effet, les unités de sièges 13 de la première rangée 12.1 profite de l'absence de passage d'accès vers un couloir de circulation 14 pour optimiser les dimensions de leur surface de lit SL.

Les figures 2 et 3 montrent une cabine d'avion 11 comportant plusieurs arrangement 10 d'unités de sièges 13. On distingue deux groupes latéraux 23a, 23b comprenant des unités de sièges 13. Les deux groupes latéraux 23a, 23b sont constitués respectivement par deux rangées d'unités de sièges 13 positionnées le long d'une paroi latérale du fuselage de la cabine d'avion 10. En outre, un groupe central 24 est préférentiellement constitué de deux ensembles de deux rangées, soit quatre rangées d'unités de sièges 13 au total. Dans un tel agencement, les rangées d'unités de sièges 13 du groupe central 24 sont avantageusement accolées latéralement les unes par rapport aux autres.

Le principe de l'arrangement de la figure 1 est ainsi reproduit quatre fois: une fois dans chaque groupe latéral 23a, 23b et deux fois dans le groupe central 24, de telle façon qu'il existe une symétrie par rapport à l'axe X de la cabine d'avion 10. Sur la figure 3, cette symétrie est respectée sauf dans la zone d'implantation des modules de toilettes du côté du groupe latéral 23b.

Les groupes latéraux 23a, 23b sont respectivement séparés du groupe central 24 par un couloir de circulation 14. Selon la configuration présentée, deux couloirs de circulation 14 sont donc prévus dans la cabine d'avion 10, spécifiquement entre chaque groupe latéral 23a, 23b et le groupe central 24. En variante, les deux groupes latéraux 23a, 23b pourront être formés chacun par plus de deux rangées d'unités de sièges 13. Le groupe central 24 pourra également comporter uniquement deux rangées d'unités de sièges 13.

Grâce à l'invention, tous les sièges 15 ont un accès direct à un couloir de circulation 14 correspondant, y compris les sièges des groupes latéraux 23a, 23b les plus éloignés du couloir 14 via un passage d'accès 21, tel que cela a été précédemment décrit.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

Bien évidemment, l'invention n'est pas limitée aux modes de réalisation décrits précédemment et fournis uniquement à titre d'exemple. Elle englobe diverses modifications et autres variantes que pourra envisager l'homme du métier dans le cadre de la présente invention et notamment toutes combinaisons des différents modes de fonctionnement décrits précédemment, pouvant être pris séparément ou en association, dans la portée des revendications annexées.

## Revendications

1. Arrangement (10) d'unités de sièges (13) individuelles destinées à être installées notamment dans une cabine d'avion (11) comportant:
- une première rangée (12.1) d'unités de sièges (13) disposées les unes derrière les autres et tournées dans une première direction (D1) de la cabine d'avion (11),
- une deuxième rangée (12.2) d'unités de sièges (13) disposées les unes derrière les autres et tournées dans une deuxième direction (D2) de la cabine d'avion (11) opposée à la première direction (D1), la deuxième rangée (12.2) d'unités de sièges (13) étant disposée du côté d'un couloir de circulation (14),
- chaque unité de siège (13) comportant un siège (15) convertible entre une position assise et une position allongée, une console (17) comportant une zone de pieds (18) destinée à recevoir les pieds du passager assis dans le siège (15) correspondant, et une coque d'intimité (16),
dans lequel une console (17) d'une unité de siège (13) d'une rangée donnée est disposée à proximité d'un siège (15) d'une unité de siège (13) de l'autre rangée pour définir un espace (19) pour ranger et/ou poser des objets,
- et en ce que ledit arrangement (10) présente des passages d'accès (21) vers un couloir de circulation (14), un passage d'accès (21) étant délimité au moins en partie d'une part par une coque (16) d'une unité de siège (13) de la deuxième rangée (12.2) et d'autre part par une console (17) adjacente d'une unité de siège (13) de la deuxième rangée (12.2), de telle façon que chaque passage d'accès (21) autorise un accès direct au couloir de circulation (14) à un passager d'un siège (15) appartenant à la première rangée (12.1) d'unités de sièges (13),
**caractérisé en ce que** les unités de sièges (13) de la première rangée (12.1) et les unités de sièges (13) de la deuxième rangée (12.2) sont arrangées par bloc (22) de deux unités de sièges (13), chaque bloc (22) comportant une unité de siège (13) de la première rangée (12.1) et une unité de siège (13) de la deuxième rangée (12.2),
- chaque bloc (22) de deux d'unités de sièges (13) comportant un premier siège (15) tourné dans la première direction (D1) de la cabine d'avion (11) et un deuxième siège (15) tourné dans la deuxième direction (D2) opposée de la cabine d'avion (11),
- le premier siège (15) et le deuxième siège (15) de chaque bloc (22) se recouvrant longitudinalement au niveau d'un dossier (20) de ces sièges (15).

2. Arrangement (10) d'unités de sièges selon la revendication 1, **caractérisé en ce que** les coques (16) des sièges (15) d'un bloc (22) sont monoblocs l'une par rapport à l'autre.

3. Arrangement (10) d'unités de sièges selon la revendication 1 ou 2, **caractérisé en ce qu'**un axe (X1) d'un passage d'accès (21) forme un angle non nul avec une droite perpendiculaire à un axe (X) de la cabine d'avion (11).

4. Arrangement (10) d'unités de sièges selon l'une quelconque des revendications 1 à 3, **caractérisé en ce qu'**une surface d'un siège (15) en position allongée et une surface d'une zone de pieds (18) située dans un prolongement dudit siège (15) en position allongée définissent une surface de lit (SL) d'une unité de siège (13) correspondante.

5. Arrangement (10) d'unités de sièges selon la revendication 4, **caractérisé en ce qu'**une plus grande dimension (Dmax) de la surface de lit (SL) d'une unité siège (15) de la deuxième rangée (12.2) forme un angle (A) non nul par rapport à un axe (X) de la cabine d'avion (11).

6. Arrangement (10) d'unités de sièges selon l'une quelconque des revendications 1 à 5, **caractérisé en ce qu'**un pas (P) entre deux unités de sièges (13) de la première rangée (12.1) est le même qu'un pas (P) entre deux unités de sièges (13) de la deuxième rangée (12.2).

7. Arrangement (10) d'unités de sièges selon la revendication 6, **caractérisé en ce que** le pas (P) entre deux unités de sièges (13) de la première rangée (12.1) ou de la deuxième rangée (12.2) est compris entre 1.77 et 2.16 m (70 et 85 pouces) et vaut de préférence 1.90 m (75 pouces).

8. Cabine d'avion (11) **caractérisée en ce qu'**elle comporte au moins un arrangement (10) d'unités de sièges (13) tel que défini selon l'une quelconque des revendications précédentes.

## Patentansprüche

1. Anordnung (10) von einzelnen Sitzeinheiten (13), die insbesondere zum Einbau in eine Flugzeugkabine (11) vorgesehen ist, umfassend:
- eine erste Reihe (12.1) von hintereinander angeordneten Sitzeinheiten (13), die in eine erste Richtung (D1) der Flugzeugkabine (11) weisen,
- eine zweite Reihe (12.2) von hintereinander angeordneten Sitzeinheiten (13), die in eine der ersten Richtung (D1) entgegengesetzte zweite Richtung (D2) der Flugzeugkabine (11) weisen, wobei die zweite Reihe (12.2) von Sitzeinheiten (13) auf der Seite eines Ganges (14) angeordnet ist,
wobei
- jede Sitzeinheit (13) einen zwischen einer Sitzposition und einer Liegeposition umwandelbaren Sitz (15), eine Konsole (17) mit einem Fußbereich (18) zur Aufnahme der Füße des Passagiers im entsprechenden Sitz (15) und eine Sichtschutzschale (16) umfasst,
wobei
- eine Konsole (17) einer Sitzeinheit (13) einer bestimmten Reihe in der Nähe eines Sitzes (15) einer Sitzeinheit (13) der anderen Reihe angeordnet ist, um einen Raum (19) zum Verstauen und/oder Platzieren von Gegenständen zu definieren,
- und die Anordnung (10) Zugangspassagen (21) zu einem Gang (14) umfasst, wobei eine Zugangspassage (21) zumindest teilweise einerseits durch eine Schale (16) einer Sitzeinheit (13) der zweiten Reihe (12.2) und andererseits durch eine benachbarte Konsole (17) einer Sitzeinheit (13) der zweiten Reihe (12.2) begrenzt ist, so dass jede Zugangspassage (21) einem Passagier eines Sitzes (15) der ersten Reihe (12.1) von Sitzeinheiten (13) den direkten Zugang zum Gang (14) ermöglicht,
**dadurch gekennzeichnet, dass**
- die Sitzeinheiten (13) der ersten Reihe (12.1) und die Sitzeinheiten (13) der zweiten Reihe (12.2) in Blöcken (22) mit je zwei Sitzeinheiten (13) angeordnet sind, wobei jeder Block (22) aus einer Sitzeinheit (13) der ersten Reihe (12.1) und einer Sitzeinheit (13) der zweiten Reihe (12.2) besteht,
- wobei jeder Block (22) mit zwei Sitzeinheiten (13) aus einem in die erste Richtung (D1) der Flugzeugkabine (11) weisenden ersten Sitz (15) und einem in die zweite entgegengesetzte Richtung (D2) der Flugzeugkabine (11) weisenden zweiten Sitz (15) besteht,
- wobei der erste Sitz (15) und der zweite Sitz (15) jedes Blocks (22) einander in Längsrichtung an einer Rückenlehne (20) dieser Sitze (15) überlappen.

2. Anordnung (10) von Sitzeinheiten nach Anspruch 1, **dadurch gekennzeichnet, dass** die Schalen (16) der Sitze (15) eines Blocks (22) einstückig miteinander ausgebildet sind.

3. Anordnung (10) von Sitzeinheiten nach Anspruch 1 oder 2, **dadurch gekennzeichnet, dass** eine Achse (X1) einer Zugangspassage (21) mit einer auf einer Achse (X) der Flugzeugkabine (11) senkrechten Geraden einen von Null verschiedenen Winkel bildet.

4. Anordnung (10) von Sitzeinheiten nach einem der Ansprüche 1 bis 3, **dadurch gekennzeichnet, dass** eine Oberfläche eines Sitzes (15) in der Liegeposition und eine Oberfläche eines Fußbereichs (18) in einer Verlängerung des Sitzes (15) in der Liegeposition eine Liegefläche (SL) einer entsprechenden Sitzeinheit (13) definieren.

5. Anordnung (10) von Sitzeinheiten nach Anspruch 4, **dadurch gekennzeichnet, dass** eine größte Abmessung (Dmax) der Liegefläche (SL) einer Sitzeinheit (15) der zweiten Reihe (12.2) mit einer Achse (X) der Flugzeugkabine (11) einen von Null verschiedenen Winkel (A) bildet.

6. Anordnung (10) von Sitzeinheiten nach einem der Ansprüche 1 bis 5, **dadurch gekennzeichnet, dass** ein Abstand (P) zwischen zwei Sitzeinheiten (13) der ersten Reihe (12.1) gleich einem Abstand (P) zwischen zwei Sitzeinheiten (13) der zweiten Reihe (12.2) ist.

7. Sitzanordnung (10) nach Anspruch 6, **dadurch gekennzeichnet, dass** der Abstand (P) zwischen zwei Sitzeinheiten (13) der ersten Reihe (12.1) oder der zweiten Reihe (12.2) zwischen 1,77 und 2,16 m (70 und 85 Zoll) und vorzugsweise 1,90 m (75 Zoll) beträgt.

8. Flugzeugkabine (11), **dadurch gekennzeichnet, dass** sie mindestens eine Anordnung (10) von Sitzeinheiten (13) gemäß einem der vorhergehenden Ansprüche umfasst.

## Claims

1. An arrangement (10) of individual seat units (13) intended to be installed in particular in an aircraft cabin (11), comprising:
- a first row (12.1) of seat units (13) arranged behind one another and facing in a first direction (D1) of the aircraft cabin (11),
- a second row (12.2) of seat units (13) arranged behind one another and facing in a second direction (D2) of the aircraft cabin (11) opposite the first direction (D1), the second row (12.2) of seat units (13) being arranged on the side of an aisle (14),
- each seat unit (13) comprising a seat (15) convertible between a seating position and a reclined position, a console (17) comprising a foot area (18) for receiving the feet of the passenger in the corresponding seat (15), and a privacy shell (16),
wherein
- a console (17) of a seat unit (13) of a given row is arranged in proximity to a seat (15) of a seat unit (13) of the other row so as to define a space (19) for storing and/or placing objects,
- and said arrangement (10) includes access passages (21) to an aisle (14), an access passage (21) being delimited at least in part on the one hand by a shell (16) of a seat unit (13) of the second row (12.2) and on the other hand by an adjacent console (17) of a seat unit (13) of the second row (12.2), such that each access passage (21) allows a passenger of a seat (15) of the first row (12.1) of seat units (13) to access directly to the aisle (14),
**characterized in that**
- the seat units (13) of the first row (12.1) and the seat units (13) of the second row (12.2) are arranged in blocks (22) of two seat units (13), each block (22) comprising one seat unit (13) of the first row (12.1) and one seat unit (13) of the second row (12.2),
- each block (22) of two seat units (13) comprising a first seat (15) facing in the first direction (D1) of the aircraft cabin (11) and a second seat (15) facing in the second opposite direction (D2) of the aircraft cabin (11),
- the first seat (15) and the second seat (15) of each block (22) overlapping each other longitudinally at a backrest (20) of these seats (15).

2. The arrangement (10) of seat units according to claim 1, **characterized in that** the shells (16) of the seats (15) of a block (22) are integral with each other.

3. The arrangement (10) of seat units according to claim 1 or 2, **characterized in that** an axis (X1) of an access passage (21) forms a non-zero angle with a straight line perpendicular to an axis (X) of the aircraft cabin (11).

4. The arrangement (10) of seat units according to any one of the claims 1 to 3, **characterized in that** a surface of a seat (15) in the reclined position and a surface of a foot area (18) in an extension of said seat (15) in the reclined position define a bed surface (SL) of a corresponding seat unit (13).

5. The arrangement (10) of seat units according to claim 4, **characterized in that** a largest dimension (Dmax) of the bed surface (SL) of a seat unit (15) of the second row (12.2) forms a non-zero angle (A) with respect to an axis (X) of the aircraft cabin (11).

6. The arrangement (10) of seat units according to any of the claims 1 to 5, **characterized in that** a pitch (P) between two seat units (13) of the first row (12.1) is equal to a pitch (P) between two seat units (13) of the second row (12.2) .

7. The arrangement (10) of seat units according to claim 6, **characterized in that** the pitch (P) between two seat units (13) of the first row (12.1) or of the second row (12.2) is between 1.77 and 2.16 m (70 and 85 inches) and is preferably of 1.90 m (75 inches).

8. An aircraft cabin (11), **characterized in that** it comprises at least one arrangement (10) of seat units (13) as defined according to any of the preceding claims.
